# EUROPÄISCHE PATENTSCHRIFT

(11) **EP 3 752 388 B1**
(45) Veröffentlichungstag und Bekanntmachung des Hinweises auf die Patenterteilung: **08.03.2023**
(21) Anmeldenummer: 19716303.3
(22) Anmeldetag: 18.03.2019
(51) Int. Cl.: B60N 2/015, B61D 33/00, B61D 17/04, B61D 17/08, B60N 2/24

(54) **BEFESTIGUNG FÜR INNENAUSBAUTEILE VON FAHRZEUGEN**
ATTACHMENT FOR INTERNAL FIXTURES OF VEHICLES
FIXATION POUR DES PIÈCES DE FINITION INTÉRIEURES DE VÉHICULES

(30) Priorität: 22.03.2018 AT 502392018
(43) Veröffentlichungstag der Anmeldung: 23.12.2020
(73) Patentinhaber: Siemens Mobility Austria GmbH, 1210 Wien (AT)
(72) Erfinder: MACK, Florian, 1220 Wien (AT); MISLIK, Helga, 1130 Wien (AT)
(74) Vertreter: Deffner, Rolf
(86) Internationale Anmeldenummer: PCT/EP2019/056665
(87) Internationale Veröffentlichungsnummer: WO 2019/179918

(56) Entgegenhaltungen:
- DE-A1- 19 547 095
- DE-A1-102008 039 165
- DE-A1-102012 201 291
- DE-A1-102013 215 232

## Beschreibung

### Technisches Gebiet

Die Erfindung betrifft eine Befestigung für Innenausbauteile von Fahrzeugen.

### Stand der Technik

Innenausbauteile von Passagierschienenfahrzeugen, wie Trennwände, Seitenwandverkleidungen, insbesondere aber Passagiersitze werden bei Fahrzeugen in Integralbauweise meist an C-Schienen in den Seitenwänden befestigt. Diese C-Schienen können in die Großkomponenten (Seitenwände, Dach, Stirnwände) des Schienenfahrzeugs bildenden Leichtmetallprofile einfach vorgesehen werden. Diese bilden die Befestigungsbasis für die Innenausbauteile, welche an den C-Schienen mittels sogenannter Nutensteine befestigt werden können. Dabei sind jedoch Adapter erforderlich, welche die zu befestigenden Innenausbauteile mit der, bzw. den C-Schienen verbinden. Somit gestaltet sich die Montage sehr aufwendig, da eine große Anzahl solcher Adapter und zugehöriges Befestigungsmaterial wie Schrauben, Muttern Scheiben und Schraubensicherungen erforderlich ist. Weiters sind die aus dem Passagierraum zugänglichen Schrauben meist vor unbefugtem Lösen zu sicher, bzw. zu verdecken. Aus dem Stand der Technik ist bekannt, diese C-Schienen einstückig mit einem Leichtmetallprofil einer Seitenwand eines Fahrzeugs in Integralbauweise herzustellen. Eine solche Befestigung ist in der deutschen Offenlegungsschrift DE 10 2008 039 165 A1 offenbart. Eine ähnliche Art, Innenausbauteile zu befestigen zeigt die Offenlegungsschrift DE 195 47 095 A1.

### Darstellung der Erfindung

Der Erfindung liegt daher die Aufgabe zugrunde, eine Befestigung für Innenausbauteile von Fahrzeugen anzugeben, welche eine rasche Montage, bzw. Demontage ermöglichen, wobei insbesondere die Anzahl erforderlicher Befestigungselemente reduziert ist.

Die Aufgabe wird durch eine Befestigung für Innenausbauteile für ein Fahrzeug mit den Merkmalen des Anspruchs 1 und ein Fahrzeug nach Anspruch 5 gelöst. Vorteilhafte Ausgestaltungen sind Gegenstand untergeordneter Ansprüche. Dem Grundgedanken der Erfindung nach wird eine Befestigung für Innenausbauteile von Fahrzeugen, insbesondere Schienenfahrzeugen, beschrieben, bei welcher an einer Innenseite einer Wand eines Fahrzeuges eine Schiene, umfassend eine Ausnehmung angeordnet ist und das zur Befestigung vorgesehene Innenausbauteil eine korrespondierende Ausformung umfasst, welche in Einbaulage des Innenausbauteils in die Ausnehmung eingreift.

Dadurch ist der Vorteil erzielbar, ein Innenausbauteil in einem Fahrzeug befestigen zu können, wobei eine unmittelbare Befestigung an einer Wand des Fahrzeugs erfolgt und somit keine Zwischenstücke, Adapter oder ähnliches erforderlich sind.

Erfindungsgemäß ist eine Schiene vorgesehen, welche an einer Innenseite einer Wand eines Fahrzeugs verläuft und welche eine Ausnehmung umfasst, welche in Richtung des Innenraums des Fahrzeugs orientiert ist, also aus dem Innenraum her zugänglich ist. Ein zur Befestigung vorgesehenes Innenausbauteil ist mit einer korrespondierenden Ausformung versehen, welche zum Eingriff in die Ausnehmung der Schiene eingerichtet ist. Zur Befestigung wird diese Ausformung in die Ausnehmung der Schiene eingeführt. Solcherart ist das Innenausbauteil noch nicht gegen unbeabsichtigtes Abfallen oder Lösen gesichert, sodass es mit einer Befestigungseinrichtung, typischerweise einer Schraubverbindung gesichert wird.

Dies kann, nach einer bevorzugten Ausführungsform der Erfindung mittels einer Schraubverbindung, welche das Innenausbauteil mit der Schiene verbindet erfolgen. Dies ist insbesondere bei Innenausbauteilen vorteilhaft, welche neben der Verbindung mit der Schiene keine weiteren Befestigungspunkte mit dem Fahrzeug aufweisen. Dafür seien beispielsweise längs angeordnete Sitze genannt.

Für andere Innenausbauteile, welche mindestens einen weiteren Befestigungspunkt ausweisen, kann diese Schraubverbindung mit der Schiene entfallen. Dabei ist er vorteilhaft, die Ausnehmung und die Ausformung so zu gestalten, dass diese Bauteile eine formschlüssige Verbindung eingehen können, welche nach Verbindung des Innenausbauteils mit dem Fahrzeug an dem weiteren Befestigungspunkt nicht mehr lösbar ist. Dabei ist der Innenausbauteil während des Montagevorgangs so zu führen bzw. bewegen, dass die Ausformung in die Ausnehmung eingeführt wird und daraufhin das weitere Befestigungselement geschlossen wird. Dabei ist besonders vorteilhaft, dass dabei an der Schiene keine Schraubverbindung mit dem Innenausbauteil vorgesehen werden muß. Diese Schiene kann somit im Zugriffsbereich der Passagiere angeordnet sein, denn ein unbeabsichtigtes oder vorsätzliches Lösen von Befestigungselementen ist damit ausgeschlossen. Es ist nur sicherzustellen, dass die im Betrieb auftretenden Kräfte zwischen dem Innenausbauteil und der Schiene übertragbar sind.

In weiterer Fortbildung der Erfindung ist es vorteilhaft, die Ausformung des Innenausbauteils mit einer Umhüllung auszustatten, welche in eingebauter Position des Innenausbauteils zwischen der Ausformung und der Ausnehmung der Schiene angeordnet ist. Solcherart kann eine thermische Entkopplung der genannten Bauteile realisiert werden, was beispielsweise bei in Längsrichtung angeordneten Sitzen vorteilhaft ist, da diese sonst eine hohe Wärmeabfuhr aus dem Passagierraum bewirken. Diese Umhüllung ist erfindungsgemäß aus Kunststoff auszuführen und bewirkt des Weiteren eine Reduktion der Übertragung von Schall und Vibrationen zwischen dem Wagenkasten des Fahrzeugs und dem Innenausbauteil.

Es ist besonders vorteilhaft, die gegenständliche Befestigung für Innenausbauteile bei Fahrzeugen in Leichtmetall Integralbauweise einzusetzen, da bei diesen Fahrzeugen die Schiene sehr einfach als Teil eines Leichtmetallprofils gefertigt werden kann. Solcherart kann die Schiene einstückig mit dem Leichtmetallprofil in einem Stranggußverfahren hergestellt werden. Da bei Fahrzeugen in Integralbauweise die Leichtmetallprofile im Wesentlichen horizontal verlaufen, können sie insbesondere gut für die Montage von Sitzen eingesetzt werden.

Bei Fahrzeugen in Integralbauweise erfolgen nach dem Fügen mehrerer Leichtmetallprofile zu einer Wand eine Reihe von Bearbeitungsschritten, beispielsweise dem Ausfräsen von Festeröffnungen. Daher kann zur Einsparung von unterschiedlichen Profiltypen der mit einer erfindungsgemäßen Schiene ausgestattete Profiltyp auch für die gesamte Wand eingesetzt werden, es sind allenfalls die überflüssigen Schienen entsprechend zu entfernen, was wegen der ohnedies erfolgenden Bearbeitungen nicht nachteilig ist.

Neben der Montage von Sitzen kann die erfindungsgemäße Befestigung auch für alle weiteren gebräuchlichen Innenausbauteile, wie Trennwänden, Stehplatzlehnen, Seitenwandverkleidungen, Fahrlehrersitzen, Fahrscheinautomaten, Schaltschränken, usw. eingesetzt werden.

Die Schiene kann auch als getrennter Bauteil realisiert sein und an der Wand eines Fahrzeugs befestigt werden, besonders vorteilhaft ist es jedoch sie einstückig als Abschnitt eines Leichtmetallprofils, welches einen Teil des Wand bildet, herzustellen.

### Kurzbeschreibung der Zeichnungen

Es zeigen beispielhaft:
**Fig.1** Befestigung eines Innenausbauteils.
**Fig.2** Befestigung eines Innenausbauteils - Verbunden.

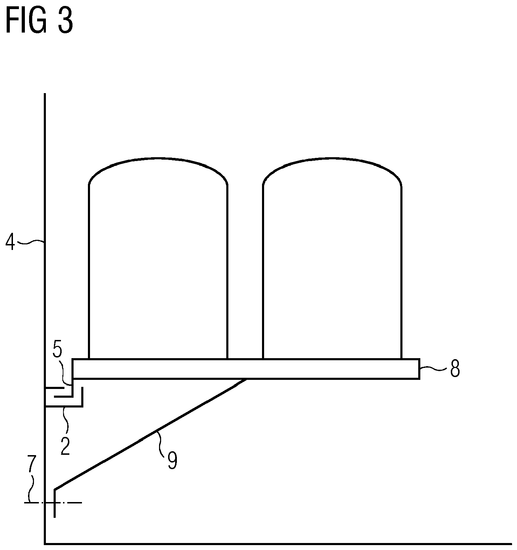

**Fig.3** Befestigung eines Quersitzes.

### Ausführung der Erfindung

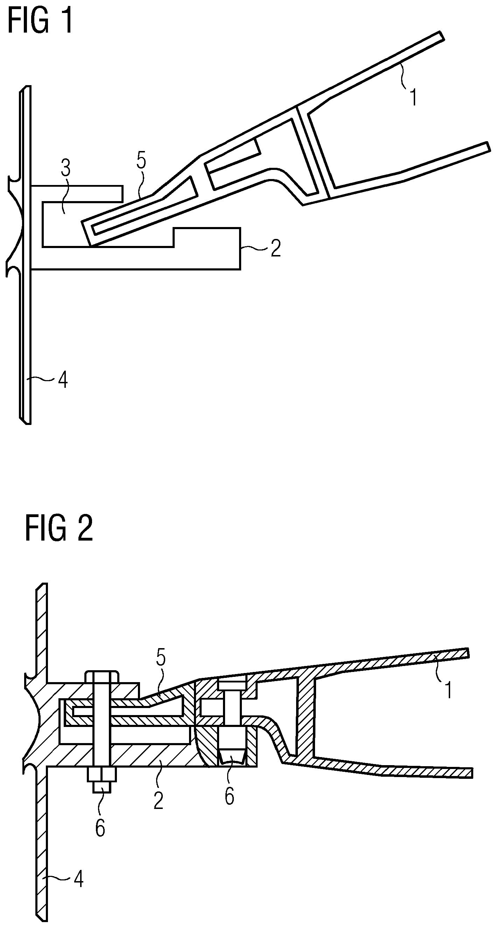

**Fig.1** zeigt beispielhaft und schematisch eine Befestigung eines Innenausbauteils. Es ist ein Schnitt durch eine Wand 4 eines Fahrzeugs, beispielsweise eines Schienenfahrzeugs dargestellt. Die Wand 4 ist aus Leichtmetallprofilen aufgebaut, wobei eines der die Wand bildenden Profile eine Schiene 2 umfasst, welche einstückig mit dem Profil hergestellt ist. Diese Schiene 2 weist eine Ausnehmung 3 auf, welche so gestaltet ist, dass eine Ausformung 5 in sie eingebracht werden kann. Die Ausformung 5 ist ein Abschnitt eines Innenausbauteils 1, welcher an der Wand 4 zu befestigen ist. In gezeigtem Ausführungsbeispiel ist der Innenausbauteil 1 als Sitz ausgeführt, welcher unmittelbar an der Wand 4 angeordnet werden soll und somit einen sogenannten Längssitz bildet. Fig.1 stellt den Vorgang des Einbringens der Ausformung 5 in die Ausnehmung 3 der Schiene 2 dar, Mittel zur Fixierung des Innenausbauteils 1 in seiner vorgesehenen Montageposition sind in dieser vereinfachten Prinzipdarstellung nicht gezeigt.

**Fig.2** zeigt beispielhaft und schematisch eine Befestigung eines Innenausbauteils in verbundener Position. Es ist das Ausführungsbeispiel aus Fig.1 dargestellt, wobei der Innenausbauteil 1 fest und lösbar mit der Wand 4 verbunden ist. Dazu sind Schraubverbindungen 6 vorgesehen, welche in Einbaulage des Innenausbauteils 1 den Innenausbauteil 1 mit der Schiene 2 und somit mit der Wand 4 verbinden.

**Fig.2** zeigt beispielhaft und schematisch eine Befestigung eines Quersitzes. Es ist eine stark abstrahierte Darstellung eines Quersitzes 8 in Form eines Doppelsitzes gezeigt, welcher an einer Wand 4 eines Fahrzeugs befestigt ist. Ein solcher Quersitz 8 kann nicht ausschließlich an einer Wand 4 befestigt werden, sondern erfordert eine Abstützung in Form einer Strebe 9. Dabei kann die Schiene 2 so geformt sein, dass die in sie eingebrachte Ausformung 5 nach dem Schließen der Verbindungsstelle 7 formschlüssig gehalten ist. Dadurch können Befestigungsmittel an der Schiene 2 vermieden werden, es ist ausschließlich ein lösbares Befestigungsmittel an der Verbindungsstelle 7 zwischen der Strebe 9 und der Wand 7 vorzusehen.

### Liste der Bezeichnungen

- 1: Innenausbauteil
- 2: Schiene
- 3: Ausnehmung
- 4: Wand
- 5: Ausformung
- 6: Schraubverbindung
- 7: Verbindungsstelle
- 8: Quersitz
- 9: Strebe

## Patentansprüche

1. Befestigung für Innenausbauteile (1) von Fahrzeugen, insbesondere Schienenfahrzeugen in Integralbauweise, wobei an einer Innenseite einer Wand (4) eines Fahrzeuges eine einstückig mit einem Leichtmetallprofil einer Wand des Fahrzeugs aufgebaute Schiene (2), umfassend eine Ausnehmung (3) angeordnet ist und das zur Befestigung vorgesehene Innenausbauteil (1) eine korrespondierende Ausformung (5) umfasst, welche in Einbaulage des Innenausbauteils (1) in die Ausnehmung (3) eingreift,
**dadurch gekennzeichnet, dass**
die Ausformung (5) mit einer Kunststoffbeilage ummantelt ist.

2. Befestigung für Innenausbauteile (1) von Fahrzeugen nach Anspruch 1,
**dadurch gekennzeichnet, dass** das Innenausbauteil (1) mindestens eine weitere Verbindungsstelle (7) mit dem Fahrzeug aufweist.

3. Befestigung für Innenausbauteile von Fahrzeugen nach Anspruch 1 oder 2
**dadurch gekennzeichnet, dass** in Einbaulage des Innenausbauteils (1) die Ausformung (5) mittels einer Schraubverbindung mit der Schiene (2) verbunden ist.

4. Befestigung für Innenausbauteile von Fahrzeugen nach einem der Ansprüche 1 bis 3,
**dadurch gekennzeichnet, dass** als Innenausbauteil (1) ein Passagiersitz vorgesehen ist.

5. Fahrzeug, insbesondere Schienenfahrzeug,
**dadurch gekennzeichnet, dass** eine Befestigung für Innenausbauteile (1) nach einem der Ansprüche 1 bis 4 vorgesehen ist.

## Claims

1. Fastening for internal fixtures (1) of vehicles, in particular rail vehicles in an integral construction mode, wherein a rail (2) which is constructed so as to be integral to a light-metal profile of a wall of the vehicle and comprises a clearance (3) is disposed on an internal side of a wall (4) of a vehicle, and the internal fixture (1) provided for fastening comprises a corresponding moulding (5) which in the installed position of the internal fixture (1) engages in the clearance (3),
**characterized in that**
the moulding (5) is encased by a plastics material shim.

2. Fastening for internal fixtures (1) of vehicles according to Claim 1,
**characterized in that** the internal fixture (1) has at least one further connection point (7) to the vehicle.

3. Fastening for internal fixtures of vehicles according to Claim 1 or 2,
**characterized in that** in the installed position of the internal fixture (1) the moulding (5) is connected to the rail (2) by means of a screw connection.

4. Fastening for internal fixtures of vehicles according to one of Claims 1 to 3, **characterized in that** a passenger seat is provided as the internal fixture (1).

5. Vehicle, in particular rail vehicle,
**characterized in that** a fastening for internal fixtures (1) according to one of Claims 1 to 4 is provided.

## Revendications

1. Fixation pour éléments d'aménagement intérieur (1) de véhicules,
en particulier de véhicules ferroviaires à construction intégrée,
dans laquelle est prévu un rail (2) construit d'un seul tenant avec un profilé en métal léger d'une paroi du véhicule sur un côté intérieur d'une paroi (4) d'un véhicule et comprenant un évidement (3) ,
et l'élément de construction intérieur (1) prévu pour la fixation comprend une forme (5) correspondante qui s'engage dans l'évidement (3) dans la position de montage de l'élément de construction intérieur (1),
**caractérisé en ce que** la forme (5) est enveloppée d'une garniture en matière plastique.

2. Fixation pour éléments d'aménagement intérieur (1) de véhicules selon la revendication 1,
**caractérisé en ce que** l'élément de construction intérieur (1) présente au moins un autre point de liaison (7) avec le véhicule.

3. Fixation pour composants intérieurs de véhicules selon la revendication 1 ou 2
**caractérisé en ce que,** dans la position de montage de l'élément de construction intérieur (1), la forme (5) est reliée au rail (2) au moyen d'un assemblage par vis.

4. Fixation pour éléments d'aménagement intérieur de véhicules selon l'une des revendications 1 à 3,
**caractérisé en ce qu'**un siège de passager est prévu comme élément de construction intérieur (1).

5. Véhicule, particulièrement un véhicule ferroviaire,
**caractérisé en ce qu'**il est prévu une fixation pour des éléments de finition intérieure (1) selon l'une des revendications 1 à 4.
